# EUROPEAN PATENT APPLICATION

(11) **EP 4 826 579 A1**
(43) Date of publication of application: **21.10.2026**
(21) Application number: 24916507.7
(22) Date of filing: 18.10.2024
(51) Int. Cl.: G06F 21/53

(54) **DATA MANAGEMENT METHOD AND RELATED DEVICE**

(30) Priority: 11.01.2024 CN 202410044120; 29.04.2024 CN 202410532731
(71) Applicant: Huawei Cloud Computing Technologies Co., Ltd., Gui'an New District, Guizhou 550025 (CN)
(72) Inventor: HUANG, Xinghai, Guiyang, Guizhou 550025 (CN); LI, Zengjin, Guiyang, Guizhou 550025 (CN); XIAO, Zhengfeng, Guiyang, Guizhou 550025 (CN)
(74) Representative: Goddar, Heinz J.
(86) International application number: PCT/CN2024/125661
(87) International publication number: WO 2025/148456

(57) **Abstract**

Embodiments of this application disclose a data management method applied to a data management system. The data management system operates **in** an isolated execution environment, thereby restricting the use of third-party data to the isolated execution environment and preventing leakage of the third-party data provided by data providers. The third-party data is stored on a storage node of the data management system. When an execution node of the data management system runs a service program to execute a service of a data user, the execution node sends a data read request to the storage node for the third-party data. According to a data read policy, the storage node can control access to the third-party data by the service program, ensuring that the use of the third-party data by the data user through the service program is monitored by the storage node. This ensures secure and proper use of the third-party data by the data user and reduces the risk of data leakage.

## Description

This application claims priority to Chinese Patent Application No. 202410044120.5, filed with the China National Intellectual Property Administration on January 11, 2024 and entitled "DATA MANAGEMENT METHOD, SYSTEM, AND DEVICE, AND STORAGE MEDIUM", and to Chinese Patent Application No. 202410532731.4, filed with the China National Intellectual Property Administration on April 29, 2024 and entitled "DATA MANAGEMENT METHOD AND RELATED DEVICE", both of which are incorporated herein by reference in their entireties.

### TECHNICAL FIELD

This application relates to the field of data processing technologies, and specifically, to a data management method and a related device.

### BACKGROUND

With the continuous development of information technologies, data has extensive application demands across various business fields, and data purchasing has also emerged in many application scenarios. For example, the performance of artificial intelligence (Artificial Intelligence, AI) models heavily relies on high-quality training data. Currently, neither public data nor private data can fully satisfy training requirements of the AI models. Consequently, AI developers (namely, data users) need to purchase large amounts of high-quality data from third parties (namely, data providers).

Data providers usually define usage permissions through written agreements or by other means. However, the actual process of data usage by data users is often insufficiently transparent to data providers, resulting in misuse or even leakage of the provided data.

Therefore, there is an urgent need for a method to manage the usage process of data provided by data providers, ensuring secure and proper use of the data by data users.

### SUMMARY

Embodiments of this application provide a data management method that manages the usage process of data provided by data providers, thereby ensuring secure and proper use of the data by data users. This application further provides a corresponding apparatus, a device, a computer-readable storage medium, a computer program product, and the like.

A first aspect of this application provides a data management method. The method is applied to a data management system. The data management system is disposed in at least one data center. The data management system is located in an isolated execution environment. The isolated execution environment is connected to a data provider and a data user respectively through an application programming interface (application programming interface, API). The data management system includes an execution node and a storage node. The storage node stores third-party data of the data provider. The method includes: The execution node runs a service program, where the service program is used to execute a service of the data user; the execution node sends a data read request to the storage node, where the data read request indicates that a running service program requests to read first data from the storage node, and the first data belongs to the third-party data; and the storage node generates feedback information based on the data read request and a data read policy for the third-party data, and sends the feedback information to the execution node.

In the first aspect, the data management system is located in the isolated execution environment, so that it is difficult for the data user to directly transmit the third-party data provided by the data provider to outside the isolated execution environment. This effectively restricts the use of the third-party data to the isolated execution environment, and prevents leakage of the third-party data provided by the data provider.

In addition, the third-party data is stored on the storage node of the data management system. When the execution node of the data management system runs the service program to execute a service of the data user, when the third-party data needs to be used, the execution node sends a data read request to the storage node. In this way, according to the data read policy, the storage node can control access to the third-party data by the service program, ensuring that the use of the third-party data by the data user through the service program is monitored by the storage node. Therefore, the storage node manages the usage process of the third-party data provided by the data provider, to ensure secure and proper use of the third-party data by the data user, and reduce the risk of data leakage.

In a possible implementation of the first aspect, the method further includes monitoring behavior of the data user in accessing the data management system through the API, and monitoring behavior of the data management system in outputting data through the API.

In this possible implementation, the API may be managed by using an API gateway or an API management tool in another form, so that API-related data interaction is monitored by using the API gateway. In this way, with the API gateway or the like, behavior of an external node (the data user) in accessing an internal node (the data management system) through an API can be monitored, and behavior of the data management system in outputting data through the API can be monitored.

The access behavior may be monitored by monitoring one or more of an access frequency, a corresponding response size, response content, and the like, to identify abnormal access behavior. Monitoring the data output behavior may be detecting a similarity between data to be output in the data output behavior and the third-party data provided by the data provider, to avoid leakage of the third-party data.

In a possible implementation of the first aspect, the data read policy is determined by the data provider. The data read policy includes a policy item and an operation determined based on the policy item. The policy item includes one or more of the following items: a data policy item, a usage policy item, a count policy item, a time policy item, and a subject policy item. The data policy item is used to describe a range of data within third-party data that is readable; the usage policy item is used to describe a task within the service program that is allowed to use the third-party data; the count policy item is used to describe a usage amount threshold of the third-party data; the time policy item is used to describe a usage time range of the third-party data; and the subject policy item is used to describe a subject type to which the data read policy is applicable.

In this possible implementation, the data read policy may be flexibly configured from one or more aspects by using one or more policy items. The configuration manner is clear and easy to implement, and can improve configuration efficiency, facilitate understanding by the data user and the data provider, and facilitate negotiation and alignment between the data user and the data provider.

In a possible implementation of the first aspect, the storage node includes one or more data read policies for the third-party data. The storage node generating the feedback information based on the data read request and the data read policy for the third-party data and sending the feedback information to the execution node includes: The storage node matches the data read request against the policy item of at least one data read policy among the one or more data read policies; and if the data read policy that matches the data read request exists, the storage node generates the feedback information based on an operation in the data read policy that matches the data read request, and sends the feedback information to the execution node.

In this possible implementation, there may be one or more to-be-matched data read policies. When there are a plurality of to-be-matched data read policies, the plurality of data read policies may be matched in sequence. Specifically, matching may be performed according to policy items in the data read policies. The plurality of data read policies are sequentially matched until a matched data read policy exists, and feedback information is generated based on an operation in the data read policy; or, when it is determined that all the data read policies do not match, feedback information may be generated based on a default operation, or feedback information indicating that data reading is denied may be generated.

In a possible implementation of the first aspect, the storage node further includes a data permission policy. The data permission policy is used to determine read/write permission for the data based on a source of the data, and the data permission policy indicates that the data user has read permission for the third-party data from the data provider. Before the storage node generates the feedback information based on the first data and the data read policy for the third-party data, and sends the feedback information to the execution node, the method further includes: The storage node determines, based on the data permission policy and that the first data belongs to the third-party data, that the service program has read permission for the first data.

In this possible implementation, the data permission policy may be a system-level policy of the data management system, so that basic management can be performed on the read/write permission for the data on the storage node according to the system-level policy. The data permission policy may include indication information indicating that the data user has read permission for the third-party data from the data provider. In this way, after it is determined that the service program has read permission for the first data, the data may be read according to the data read policy.

It can be learned that, in this possible implementation, read operations for data on the storage node may be more comprehensively managed by using at least two levels of policies.

In a possible implementation of the first aspect, the data management system includes a management node. The method further includes: After obtaining an instruction for running the service program, the management node creates an access credential for accessing the storage node; and the management node indicates the execution node to run the service program, and transmits information about the access credential to the execution node. The execution node sending the data read request to the storage node includes: The execution node sends the data read request to the storage node based on the information about the access credential.

In this possible implementation, the management node may manage the access credential of the execution node for the storage node. In other words, the management node may manage permission for interaction between the execution node and the storage node. In this way, the execution node cannot independently obtain access permission for the storage node, which prevents the execution node from reading and using the third-party data of the storage node without permission, and prevents leakage and improper use of the third-party data by the execution node.

In a possible implementation of the first aspect, the method further includes deleting the access credential after the execution node stops running the service program.

In this possible implementation, after the execution node stops running the service program, the access credential is deleted to ensure validity of the access credential.

In this way, each time when the execution node starts running the service program, the execution node needs to re-obtain, through the management node, the permission for interaction between the execution node and the storage node. In this way, the execution node can neither independently obtain the access permission for the storage node nor use the obtained access permission. This effectively ensures that each access of the execution node to the storage node is controllable, and prevents the execution node from reading and using the third-party data of the storage node without permission, thereby preventing leakage and improper use of the third-party data by the execution node.

In a possible implementation of the first aspect, after the storage node generates the feedback information based on the first data and the data read policy for the third-party data, and sends the feedback information to the execution node, the method further includes: The storage node records data access behavior related to the data read request.

In this possible implementation, after the storage node stores information about the data access behavior, the data provider may conveniently and flexibly view a usage status of the third-party data stored on the storage node by the data provider.

In a possible implementation of the first aspect, the method further includes: The storage node obtains a query request input by the data provider, where the query request is used to request to query an access record related to the third-party data; and the storage node outputs the access record, where the access record includes data access behavior related to the data read request.

In this possible implementation, the data provider may conveniently query, through the storage node, a situation in which the third-party data is accessed and used by the data user. This makes use of the third-party data transparent. In addition, the data provider can detect abnormal use of the third-party data in a timely manner and adjust the data read policy in a timely manner. The data provider may further initiate a policy negotiation process to the data user through the data management system. The data management system is used as an intermediate platform to negotiate a new data read policy with the data user, thereby meeting requirements of both the data provider and the data user.

In a possible implementation of the first aspect, the method further includes: The execution node sends to-be-stored data to the storage node in a process of running the service program; and after receiving the to-be-stored data, the storage node determines and stores a derivation link of the to-be-stored data based on third-party data read by the execution node from the storage node within a specified time period. The specified time period includes a time period during which the execution node currently runs the service program. The derivation link indicates data, on the storage node, that is used to generate the to-be-stored data.

In this possible implementation, in a process of running the service program, after reading the third-party data from the storage node, the execution node may generate derived data in a process of applying the third-party data. To ensure data security, in this possible implementation, the derived data may be tracked and managed by using the derivation link, to prevent leakage of the derived data.

In a possible implementation of the first aspect, the method further includes: The execution node deletes running data related to the service program from the execution node after stopping running the service program.

In this possible implementation, it can be effectively ensured that an access history of the third-party data during the process of running the service program is deleted. This prevents the execution node from improperly retaining the third-party data used during the process of running the service program, thereby ensuring that the third-party data is not leaked or misused.

A second aspect of this application provides a data management system. The data management system has a function of implementing the method according to the first aspect or any one of the possible implementations of the first aspect. The function may be implemented by hardware, or may be implemented by hardware executing corresponding software. The hardware or the software includes one or more modules corresponding to the foregoing function, for example, a management node, an execution node, and a storage node.

A third aspect of this application provides a compute device cluster. The compute device cluster includes at least one compute device. The at least one compute device includes a processor and a memory. The memory of the at least one compute device stores computer-executable instructions that can run on the processor. When the computer-executable instructions are executed by the processor, the processor performs the method according to the first aspect or any one of the possible implementations of the first aspect.

A fourth aspect of this application provides a computer-readable storage medium storing one or more computer-executable instructions. When the computer-executable instructions are executed by a processor, the processor performs the method according to the first aspect or any one of the possible implementations of the first aspect.

A fifth aspect of this application provides a computer program product storing one or more computer-executable instructions. When the computer-executable instructions are executed by a processor, the processor performs the method according to the first aspect or any one of the possible implementations of the first aspect.

A sixth aspect of this application provides a chip system. The chip system includes a processor, configured to support the processor in implementing functions in the method according to the first aspect or any one of the possible implementations of the first aspect. In a possible design, the chip system may further include a memory. The memory is configured to store necessary program instructions and data. The chip system may include a chip, or may include a chip and another discrete component.

For technical effects brought by any one of the second aspect to the sixth aspect or the possible implementations of the second aspect to the sixth aspect, refer to the technical effects brought by the first aspect or the related possible implementations of the first aspect. Details are not described herein again.

### BRIEF DESCRIPTION OF DRAWINGS

FIG. 1 is an example schematic flowchart according to an embodiment of this application;
FIG. 2 is an example diagram of a system framework of an AI platform according to an embodiment of this application;
FIG. 3a is an example diagram of development spaces in a logical multi-tenancy scenario according to an embodiment of this application;
FIG. 3b is an example diagram of development spaces in a physical multi-tenancy scenario according to an embodiment of this application;
FIG. 4 is an example diagram of an isolated execution environment according to an embodiment of this application;
FIG. 5 is an example diagram of a management node, an execution node, and a storage node in a training scenario of an AI model according to an embodiment of this application;
FIG. 6 is an example diagram of a policy item of a data read policy according to an embodiment of this application;
FIG. 7 is an example diagram of a data management method according to an embodiment of this application;
FIG. 8 is an example schematic flowchart according to an embodiment of this application;
FIG. 9A and FIG. 9B are an example schematic flowchart according to an embodiment of this application;
FIG. 10 is an example diagram of a derivation link according to an embodiment of this application;
FIG. 11 is an example diagram of a derivation link according to an embodiment of this application;
FIG. 12 is an example diagram of a data management system according to an embodiment of this application;
FIG. 13 is a diagram of a structure of a compute device according to an embodiment of this application;
FIG. 14 is a diagram of a structure of a compute device cluster according to an embodiment of this application; and
FIG. 15 is a diagram of a structure of a compute device cluster according to an embodiment of this application.

### DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

A person of ordinary skill in the art may learn that, with the development of technologies and emergence of a new scenario, the technical solutions provided in embodiments of this application are also applicable to a similar technical problem.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items" or a similar expression thereof means any combination of these items, including any combination of singular items or plural items. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Third-party data purchasing is involved in many application scenarios.

For example, in an AI model training scenario, AI developers (namely, data users) need to purchase a large amount of high-quality data from third parties (namely, data providers).

Currently, a manner of restricting usage permissions of data users for the purchased data is to specify, through written agreements, the usage permissions of data users for the purchased data. However, it is difficult to monitor the actual process of data usage by data users, that is, and the actual process of data usage by data users is often insufficiently transparent to data providers, resulting in misuse or even leakage of the data provided by data providers (referred to as third-party data below for ease of description).

Currently, a common data use control manner adopts a user-role-permission authorization model. Data providers assign minimum permission to data users to restrict data usage. However, this control manner is simple. For example, a quantity of times of data users use the third-party data cannot be controlled, and usage of the third-party data by data users cannot be recorded. As a result, data providers cannot learn the usage status of the third-party data. In addition, when using the third-party data through an application, data users can still copy and output the third-party data and its derived data, which causes data leakage.

Another data use control manner is that data providers attach, to the third-party data through a permission management service, usage permissions for the third-party data, and encrypts the third-party data. For example, for third-party data of a document type, data providers may set usage permissions for the third-party data and encrypt the third-party data. Then, data users may obtain the encrypted third-party data and open the encrypted third-party data through an application that applies the document. The application may perform decryption to obtain the decrypted document, and control use of the document by data users according to the usage permissions attached to the document.

However, in this data use control manner, data needs to be encrypted and decrypted, which is time-consuming when there is a large amount of data. In addition, data users may obtain plaintext data of the third-party data through the application. Therefore, the third-party data may be easily copied and forwarded by data users through the application, which causes leakage. Moreover, it is difficult for data providers to manage use and deletion of the third-party data and the derived data in the application.

It can be seen that conventional data use control manners cannot ensure secure and proper use of the third-party data by data users.

Based on this, an embodiment of this application provides a data management method that manages the usage process of third-party data provided by data providers, thereby ensuring secure and proper use of the third-party data by data users.

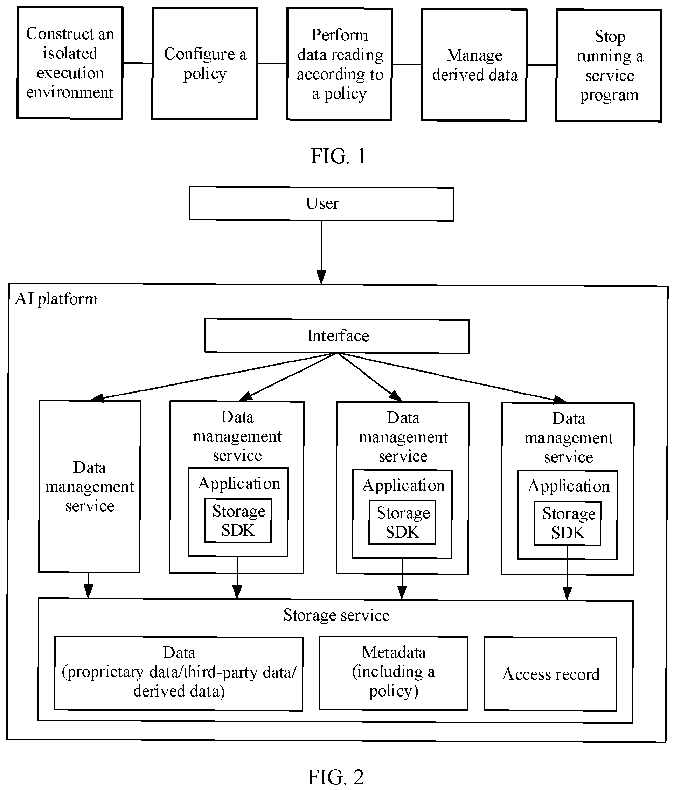

As shown in FIG. 1, the data management method in this embodiment of this application mainly relates to one or more of the following aspects:
constructing an isolated execution environment, configuring a policy, performing data reading according to a policy, managing derived data, and stopping running a service program.

The following separately describes the respective aspects by using examples.

### 1. Constructing an isolated execution environment

The data management method may be applied to a data management system, and the data management system is located in an isolated execution environment.

The isolated execution environment may be implemented by using a compute device cluster. The compute device cluster may include one or more compute devices.

A type of any compute device is not limited herein. For example, the compute device may be a terminal device, or may be a server, a server cluster, a container (container), a virtual machine (virtual machine), or the like. When the compute device cluster includes a plurality of compute devices, different compute devices may be of a same type or different types.

The one or more compute devices may be included in one or more data centers, and the data management system may be a system constructed based on resources in the data center.

The isolated execution environment in which the data management system is located may have a plurality of specific forms.

For example, the isolated execution environment may be located on a cloud platform or an AI platform implemented by using a compute device cluster, or may be a cloud service or an application, deployed on a server, that provide data computing capabilities through a network or an application programming interface (application programming interface, API), for example, a function cloud service, an online document editor, or a web disk.

The following uses an AI platform as an example for description. It should be noted that the isolated execution environment is not limited to the AI platform.

In an AI model training scenario, a service executable by the data management system located on the AI platform includes AI model training.

FIG. 2 is an example diagram of a system framework of the AI platform.

In the example shown in FIG. 2, the AI platform may provide an access interface for users such as a data user and a data provider.

For example, the interface is provided through a console (console). A user may access the console of the AI platform through a browser or the like, to access the AI platform; or an application on a client device of the user may access, through an API gateway, an API provided by the AI platform, to access the AI platform.

The AI platform may further provide one or more of a data management service, a labeling service, a training service, an inference service, and a storage service, and may provide an access interface for the users such as the data user and the data provider.

The labeling service, the training service, and the inference service may provide respective services through corresponding applications according to corresponding algorithms, and may access the storage service through a storage software development kit (software development kit, SDK) provided by the storage service.

The storage service may store data, for example, may store proprietary data of the data user, third-party data of the data provider, and derived data generated based on other data (for example, the proprietary data and the third-party data).

The storage service may further store metadata. The metadata may include information about the proprietary data, the third-party data, and the derived data, and may further include a related policy in a subsequent step, to control use of data such as the third-party data. In addition, the storage service may further store data access records and the like, so that the data provider and the like learn a usage status of the third-party data.

In this way, the data user can access the AI platform to perform AI model training on the AI platform by using resources of the AI platform.

In addition, the data provider can store and sell the third-party data of the data provider on the AI platform. In this way, the data user can use the AI platform to purchase the third-party data provided by the data provider to perform AI model training.

In this embodiment of this application, the data user may be understood as an individual, an enterprise, or an organization, or may be understood as a device such as a client, an account, a network address, or a subject represented by an identifier in another form. There may be a plurality of identifiers and specific forms of the data user. Similarly, the data provider may be understood as an individual, an enterprise, or an organization, or may be understood as a device such as a client, an account, a network address, or a subject represented by an identifier in another form. There may be a plurality of identifiers and specific forms of the data provider. This is not limited in embodiments of this application.

In this example, the isolated execution environment may be constructed on the AI platform, and the data management system may be implemented in the isolated execution environment.

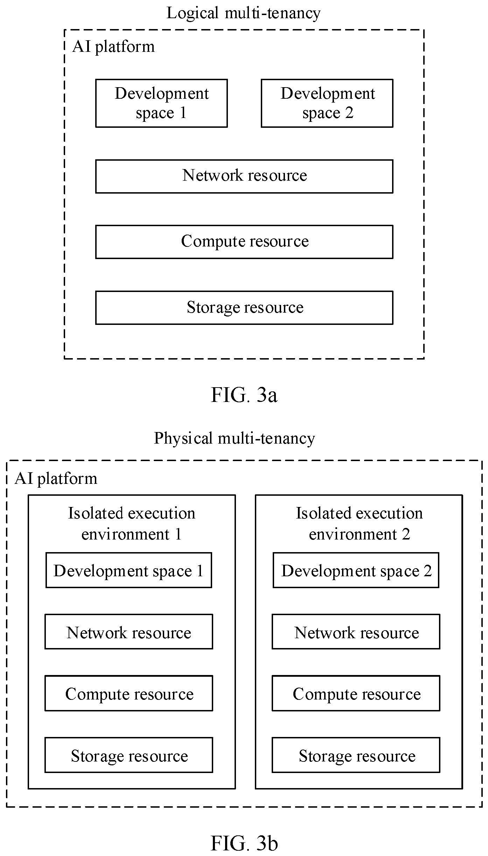

As shown in FIG. 3a, when the AI platform provides logical multi-tenant development spaces for tenants (which may be data users), the compute device cluster implementing the AI platform may process requests of a plurality of tenants. In other words, the plurality of tenants (for example, a development space 1 of a tenant 1 and a development space 2 of a tenant 2 shown in FIG. 3a) share resources of the AI platform. In this case, the isolated execution environment may be the AI platform, and the isolated execution environment may include a network resource, a compute resource, and a storage resource of the AI platform.

However, as shown in FIG. 3b, when the AI platform provides physical multi-tenant development spaces for tenants (which may be data users), a resource of a development space rented by a tenant from the AI platform is exclusively used by the tenant, and resources between tenants on the AI platform are fully isolated. In other words, in the example shown in FIG. 3b, a network resource, a compute resource, and a storage resource in a development space 1 of a tenant 1 are an isolated execution environment 1, and a network resource, a compute resource, and a storage resource in a development space 2 of a tenant 2 are an isolated execution environment 2. The isolated execution environment 1 and the isolated execution environment 2 are isolated from each other.

It can be learned that in this embodiment of this application, the isolated execution environment may be implemented from one or more aspects of a network, computing, and storage.

The following separately describes the aspects.

### 1. Network isolation

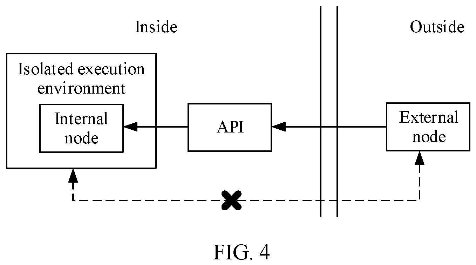

In an example shown in FIG. 4, the isolated execution environment is connected to another node outside the isolated execution environment through an API. For example, the isolated execution environment is connected to the data provider and the data user respectively through the API.

Consequently, internal nodes (for example, an execution node and a storage node in the data management system) in the isolated execution environment cannot directly communicate with external nodes (for example, a client device of the data user) outside the isolated execution environment.

In this way, information transmission between the internal node and the external node can be monitored by monitoring the API.

Specifically, in some embodiments, behavior of the data user in accessing the data management system through the API can be monitored, and behavior of the data management system in outputting data through the API can be monitored.

For example, the API may be managed by using an API gateway or an API management tool in another form. The data management system may register the API with the API gateway, to monitor API-related data interactions through the API gateway.

The API gateway may internally access the internal nodes in the isolated execution environment. The API gateway may be deployed in the isolated execution environment. For example, the API gateway may be an elastic load balance (elastic load balance, ELB) service on a cloud platform. Alternatively, the API gateway may be located outside the isolated execution environment, and is connected to the isolated execution environment by using a technology such as a virtual private cloud (virtual private cloud, VPC) peering connection, source network address translation (source network address translation, SNAT), or elastic internet protocol (elastic Internet Protocol, EIP).

In addition, the API gateway may externally be accessed by external nodes. For example, the API gateway may be connected to an external network in which the external nodes are located through the ELB service on the cloud platform.

Moreover, a network flow of the isolated execution environment may be controlled through the API gateway. For example, the network flow may be unidirectional, from an external node to the API gateway, and then from the API gateway to an internal node. In other words, only an external node may send a request to an internal node through the API, and then the internal node processes the request and sends a response to the external node through the API. However, when the internal node does not receive the request from the external node, the internal node cannot actively send data to the external node through the API.

In this way, with the API gateway or the like, behavior of the external node (the data user) in accessing the internal node (the data management system) through the API can be monitored, and behavior of the data management system outputting data through the API can be monitored.

The access behavior may be monitored by monitoring one or more of an access frequency, a corresponding response size, response content, and the like, to identify abnormal access behavior. Monitoring the data output behavior may be detecting a similarity between data to be output in the data output behavior and the third-party data provided by the data provider, to avoid leakage of the third-party data.

A specific form of the isolated execution environment is not limited herein.

For example, in a cloud platform, the isolated execution environment may be an independent network environment created by using a virtual private cloud (virtual private cloud, VPC). On a non-cloud platform, the isolated execution environment may be a small-scale network environment, or may be an independent network region isolated by using a firewall.

### 2. Computing isolation

In some examples, the data management system in the isolated execution environment includes a management node, an execution node, and a storage node. The management node may be configured to perform a system operation of the data management system. The execution node is configured to run a service program. The service program is used to execute a service of the data user. The storage node may be configured to provide a storage service, for example, storing the third-party data provided by the data provider.

Specific forms of the nodes such as the management node, the execution node, and the storage node are not limited herein. The forms of the nodes may be the same or may be different.

For example, any node may be a software module or a plug-in in the data management system; or may be a virtual machine or a container; or may be hardware in the compute device cluster implementing the data management system. For example, the execution node is a server or a server cluster in the compute device cluster, and the storage node is a storage device in the compute device cluster.

In this embodiment of this application, a service program for running a service (for example, performing AI model training) of the data user is executed by the execution node, so that the data management system performs isolated management on running of the service program and data interactions, thereby preventing leakage of the third-party data and the related derived data during execution of the service program.

In addition, the management node may further monitor a service program run by the execution node, for example, may monitor a service program that is frequently used, to detect an exception of the service program in a timely manner.

In addition, the data management system may further restrict a user's permission to view execution data such as an execution result and an execution log of a service program, for example, may restrict a scale and a frequency of viewing the execution data by the user. For example, the user may view a maximum of 1000 execution results within a specified time period, or may view a maximum of 10 MB of execution logs.

### 3. Storage isolation

The storage node in the data management system may provide a storage service.

The data user may transmit the proprietary data of the data user to the storage node, or download or delete the proprietary data of the data user from the storage node.

The data provider may transmit, to the storage node, the third-party data provided by the data provider, and store the third-party data through the storage node.

In this way, the data user may apply, to the storage node, for the permission to use the third-party data, for example, may obtain the permission to use the third-party data through purchasing. In this way, use and management of the third-party data of the data provider may be implemented through the storage node.

In an actual scenario, the third-party data and the related derived data stored on the storage node cannot be directly downloaded. If the data user or another user needs to download the third-party data from the storage node, the data user or the other user may initiate a download request for the third-party data to the data provider through the data management system. After the data provider of the third-party data approves the download request, the data user or the other user is allowed to download the corresponding third-party data from the storage node.

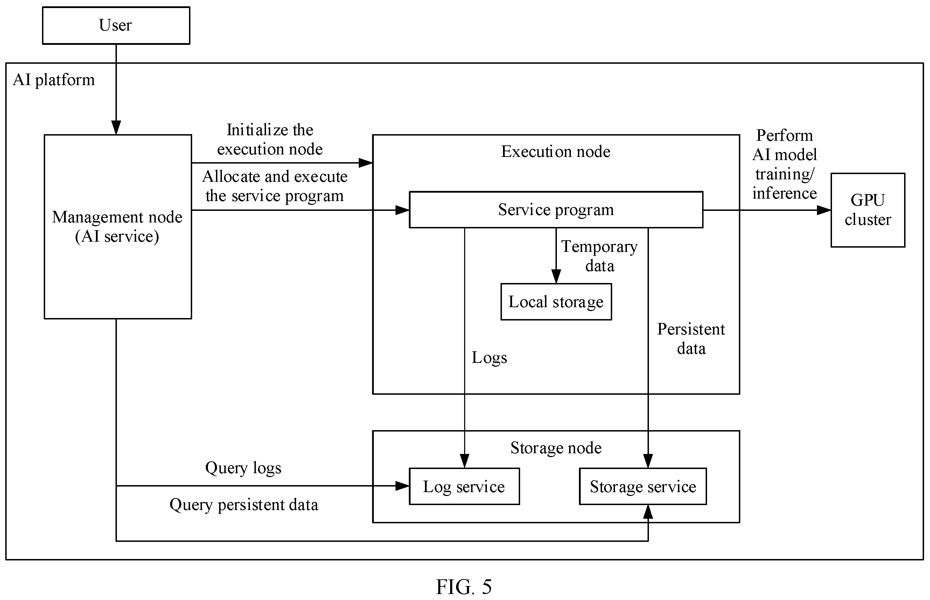

As shown in FIG. 5, an example in which the data management system is an AI platform is used to describe related functions of the management node, the execution node, and the storage node in the AI model training scenario.

In the example shown in FIG. 5, the management node of the AI platform may provide a platform-level AI service.

The AI service may trigger the execution node to execute a service based on an instruction of the data user.

Specifically, when executing the service program, the AI service first initializes the execution node, and then allocates the service program to the execution node for execution. The service program may use infrastructure of the AI platform (for example, a graphics processing unit (graphics processing unit, GPU) cluster) for AI model training and inference.

During execution of the service program, the execution node may write temporary data generated during the execution into local storage. After the service program is executed, the local storage is cleared and released. The execution node may write logs generated during the execution into a log service, or write logs into the local storage and collect, through a log agent, the logs into a log service. The execution node may also write persistent data such as AI models into the storage service. Users need to view logs and persistent data through the AI service and configure policies in the AI service to control data use.

### 2. Configuring a policy

In this embodiment of this application, the data management system may include one or more of the following policies:
a data permission policy and a data read policy.

According to the policies, the data management system can manage read operations for data on the storage node.

The following separately describes the policies by using examples.

### 1. Data permission policy

In this example, the data permission policy is used to determine read/write permission for data based on a source of the data.

In some examples, the data permission policy may be a system-level policy. In other words, the data permission policy may be applied to the data management system, and is preconfigured by developers of the data management system.

The source of the data may include one or more of the following: proprietary data, third-party data, and derived data. The proprietary data is data provided by the data user, the third-party data is data provided by the data provider, and the derived data is data obtained based on data such as the third-party data. In some examples, the storage node may consider data (also referred to as to-be-stored data) to be stored on the storage node when the execution node executes the service program as the derived data.

In some examples, the data permission policy may alternatively be used to determine read/write permission for the data based on content of the data.

The content of the data may be classified in a plurality of manners. For example, the content of the data may include common data and model data. Data other than the model data may be considered as common data.

In addition, the data permission policy may alternatively be used to determine read/write permission for the data based on usage of the data.

The following describes example content of the data permission policy by using a specific example.

**Table 1: Data permission policy**

| **Usage** | **Read/Write** | **Data type** | **Behavior** | **Remarks** |
|---|---|---|---|---|
| Inference | Read | Model data | Allow | |
| | Read | Common data | Deny | |
| | Write | Model data and model data | Deny | An inference service should not write data. |
| Another purpose | Read | Proprietary data | Allow | |
| | Write | Proprietary data | Deny | The proprietary data should be delivered through the management node of the data management system, instead of being written into the storage node through the service program on the execution node. |
| | Read/Write | Derived data | Allow | |
| | Read | Third-party data | Permission granted, and behavior determined according | |
| | | | to the data read policy | |
| | Write | Third-party data | Deny | The third-party data should be delivered through the management node of the data management system, instead of being written into the storage node through the service program on the execution node. |

It can be learned that, in the example shown in Table 1, the data permission policy may indicate that read permission is granted for the third-party data from the data provider, so that the third-party data that the service program can read from the storage node can be subsequently determined according to the data read policy.

### 2. Data read policy

In this embodiment of this application, the data read policy may be a corresponding read policy for the third-party data. A specific type of the third-party data is not limited herein. For example, the third-party data may be a file, or may be a group of files (for example, a directory or a compressed data package). The third-party data may include attributes such as a type, a name, a path, a quantity of rows, and a storage size.

In this example, a data read policy corresponding to a piece of third-party data may be determined by the data provider of the third-party data. Specifically, the data management system may provide a configuration interface, and the data provider of the third-party data inputs configuration information through the configuration interface, to configure the data read policy; or the data management system may provide a candidate data read policy (which may be obtained according to a historical data read policy or a default data read policy) for the data provider of the third-party data, and the data provider determines the candidate data read policy as the data read policy for the third-party data.

The data read policy includes a policy item and an operation determined based on the policy item. A quantity and content of policy items may vary. An object of any policy item may be the data, or may be a file in the data. A specific type of the object of each policy item may be preconfigured, for example, defined by using PolicyType. Specifically, PolicyType being DATA indicates that the object of the policy item is the data; and PolicyType being FILE indicates that the object of the policy item is a file. The operation determined based on the policy item is an action indicated after the policy item is matched, for example, may include allowing reading, denying reading, or the like.

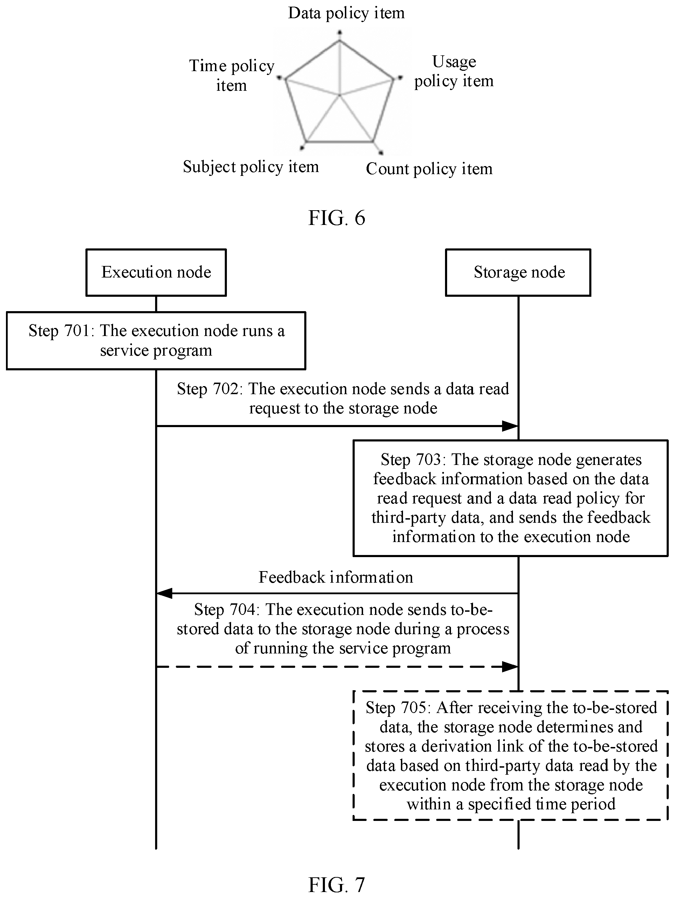

As shown in FIG. 6, in some examples, the policy item includes one or more of the following items:
a data policy item, a usage policy item, a count policy item, a time policy item, and a subject policy item.

The following separately describes the policy items by using examples.

### (1) Data policy item (Data Policy Item)

The data policy item is used to describe a range of data within third-party data that is readable. The data policy item may be used to split the data, and determine, from the split data, data that is readable.

For example, the data policy item may include path filtering (Path Filtering), column (Column) selection, and row filtering (Row Filtering).

Path filtering indicates that some files are selected from a plurality of files included in the third-party data. By default, all files are selected. Specifically, filtering may be performed by using a file name extension, a wildcard, a regular expression, or the like. The wildcard may use a simple and easy-to-use path matching expression such as an Ant-style expression.

Column selection indicates that one or more columns are selected. By default, all columns are selected. For third-party data of data types such as comma-separated values (comma-separated values, CSV), JavaScript object notation (JavaScript object notation, JSON), and Excel, columns may be defined when the third-party data is transmitted to the data management system. If no column is defined for specific third-party data, column selection is not applicable. For example, column selection is not applicable to third-party data of binary file types such as images and videos.

Row filtering indicates that the third-party data is filtered by row. Only rows satisfying a condition can be read, for example, "name in ('beijing', 'nanjing') AND age > 30", where name and age are columns of the data. For third-party data of data types such as CSV, JSON, and Excel, columns may be defined when the third-party data is transmitted to the data management system. If no row is defined for specific third-party data, row filtering is not applicable. For third-party data of binary file types such as images and videos, corresponding metadata may be filtered, for example, "imageSize < 10MB AND imageWidth < 1024", where imageSize indicates an image size, and imageWidth indicates an image width.

For example, the data policy item (Data Policy Item) may be configured by using the following code:

```
          struct DataPolicyItem {
            DataPathFilter pathFilter;
            DataSetColumns columns;
            DataSetRowFilter rowFilter;
          }
```

### (2) Usage policy item (Usage Policy Item)

The usage policy item is used to describe a task, in a service program, that can use third-party data, that is, to describe functions that can use the third-party data.

For example, in an AI model application scenario, a related function may include one or more of the following:
(a) Labeling: labeling;
(b) Feature: feature engineering;
(c) Train: training; and
(d) Reasoning: inference.

For example, the usage policy item (Usage Policy Item) may be configured by using the following code:

```
          struct UsagePolicyItem {
            String[] usageList;
          }
```

### (3) Count policy item (Count Policy Item)

The count policy item is used to describe a usage amount threshold of third-party data. In other words, the count policy item is used to describe an amount of third-party data that can be used. The usage amount may vary. When an object of the data policy item is data or a file, specific content of the usage amount may be different.

In an example, PolicyType is DATA, indicating that the object of the policy item is the data. In this case, the usage amount in the data policy item may be a quantity of use times. Specifically, the data policy item is used to describe a threshold of the quantity of use times (maxUseTimes) of the third-party data.

The threshold of the quantity of use times may be a maximum quantity of times that the third-party data can be used. A calculation rule for the quantity of use times may be defined by a user or a data management platform. The calculation rule includes but is not limited to the following content.
(a) Counted only once: When an algorithm program reads the data one or more times during one run, useTimes is incremented only by one. Counts across multiple runs are accumulated.
(b) Counted only once for multiple uses within a time period: When an algorithm program reads the data one or more times within a time period, useTimes is incremented only by one.
(c) Counted once for one use: Each time an algorithm program uses the data, useTimes is incremented by one.

In another example, PolicyType is FILE, indicating that the object of the policy item is a file. In this case, the usage amount threshold may include one or more of the following.
(a) Maximum quantity of rows (maxRowCount): indicates a maximum quantity of rows that can be used in a single file. This usage amount threshold is not applicable to unstructured third-party data such as images and videos.
(b) Maximum storage size (maxStorageSize): indicates a maximum amount of data that can be used by a single file.

For example, the count policy item (Count Policy Item) may be configured by using the following code:

```
          struct CountPolicyItem {
            int maxRowCount;
            int maxStorageSize;
            int maxUseTimes;
          }
```

### (4) Time policy item (Time Policy Item)

The time policy item is used to describe a usage time range of third-party data.

For example, the time policy item may specify specific end time, which may use, for example, an RFC 3339 date format, and may include a time zone. For example, the end time may be set to 2023-12-01T12:21:32Z.

Alternatively, the time policy item may specify use duration. For example, time at which the third-party data is transmitted to the data management system may be start time. The use duration may be represented in a plurality of manners, for example, by using Duration in RFC 3339. For example, the use duration is represented as P2DT3H4M, indicating that the use duration is "2 days, 3 hours, and 4 minutes".

For example, the time policy item (Time Policy Item) may be configured by using the following code:

```
struct TimePolicyItem {
            ZonedDateTime deadline;
            Duration duration;
          }
```

### (5) Subject policy item (Subject Policy Item)

The subject policy item is used to describe a subject type to which the data read policy is applicable, so that a type of a subject object to which a corresponding data read policy applies can be determined.

The data management system may be used by a plurality of users. Therefore, different data read policies may be specified for different users based on the subject policy item.

The subject type may vary, and may be determined based on a specific application scenario.

For example, the subject type may include one or more of the following.
(a) User (User): an account related to the data management system, for example, a user on a cloud management platform or an AI platform where the data management system is located, having a unique identifier.
(b) User group (Group): A user group is a collection of users. A data read policy applicable to the user group may be determined based on the subject policy item, which simplifies operations for granting read permission.
(c) Role (Role): A role is a collection of permissions and is defined based on the work responsibilities of users.
(d) Organizational unit (Organizational Unit): An organizational unit may be mapped to a department, a subsidiary, or a project family of an enterprise or an organization. A user may belong to an organization unit.

For example, the subject policy item (Subject Policy Item) may be configured by using the following code:

```
          struct SubjectPolicyItem {
            UserId[] users;
            GroupId[] groups;
            RoleId[] roles;
            OrganizationalUnit[] orgUnits;
          }
```

Based on any one of the foregoing examples, one or more data read policies may be configured for the third-party data.

The data read policy may be expressed in a plurality of manners.

For example, for an application such as the data management system and a service program in the data management system, the data read policy may be expressed in an open digital rights language (open digital rights language, ODRL), an extensible markup language (extensible markup language, XML), JSON, or a YAML.

For a user (for example, the data provider), a text may be used for expression, to facilitate understanding of the user.

For example, when the data read policy is expressed in text, a format of "[allow/deny] [a subject] to use [an amount] of data for [usage] within [time]" may be used, for example, "allow XXX to use no more than 1 GB of avatar image data for training within three months".

It can be seen that the data read policy may be flexibly configured from one or more aspects by using one or more policy items. The configuration manner is clear and easy to implement, and can improve configuration efficiency, facilitate understanding by the data user and the data provider, and facilitate negotiation and alignment between the data user and the data provider.

According to the foregoing policy, the storage node may record metadata information corresponding to each piece of data.

For example, specific content of the metadata information of each piece of data may be shown in Table 2.

**Table 2: Metadata information of the data stored on the storage node**

| **Metadata name** | **Description** | **Remarks** |
|---|---|---|
| Source type | Proprietary data, third-party data, and derived data | |
| Content type | Common data and model data | |
| Structure definition | Defines structured information, such as a name, a type, and a location of a column. | Optional. If no structure definition is performed, the corresponding data is a binary file. |
| Policy | Application-oriented expression of a policy | A format such as ODRL, XML, JSON, or YAML |
| Derived from | Data ID | Available only when the source type is derived data |
| Creation time | | The creation time is the start time of the usage time range. |
| | | A creation time of the third-party data is a time at which the data is stored on the storage node. |
| | | A creation time of the derived data is the same as a creation time of a source of the derived data, or is the latest time among creation times of sources of the derived data. |

In this way, use of the data may be managed by using metadata information of the data on the storage node. For a specific management manner, refer to related embodiments in a processing phase of performing data reading according to a policy. Details are not described herein.

### 3. Performing data reading according to a policy

In this embodiment of this application, in an actual application scenario, a read operation performed by the data user on the third-party data on the storage node may be managed according to the data read policy and/or the data permission policy.

Specifically, as shown in FIG. 7, in some embodiments, the method includes steps 701 to 703.

Step 701: The execution node runs a service program.

The service program is used to execute a service of the data user.

In this embodiment of this application, the execution node is configured to run the service program, so as to execute the service of the data user.

A specific function of the service program is not limited herein.

For example, in an AI model training scenario, the service program is used to perform AI model training. For example, the service program may invoke a resource such as a GPU cluster of an AI platform and training data stored on the storage node to perform AI model training.

In some examples, the execution node may be created according to an instruction of the management node in the data management system, and start to run the service program.

For example, specifically, the management node may receive an instruction from the data user to instruct to execute a specified service.

After receiving the instruction, the management node may initialize the execution node, and indicate the execution node to run the service program, so as to execute the service of the data user.

After completing current execution of the service program, the execution node may delete running data related to the current execution and stored on the execution node, such as temporary data. However, the execution node may be reserved to execute another service of the data user, or run the service program again subsequently. Alternatively, after the execution node completes the current execution of the service program, the execution node may be destroyed.

Step 702: The execution node sends a data read request to the storage node.

The data read request indicates that the running service program requests to read first data from the storage node. The first data belongs to the third-party data.

In this embodiment of this application, when the execution node needs to use the first data that belongs to the third-party data during execution of the service program, the execution node may generate and send the data read request to the storage node.

It can be learned that use of the third-party data by the execution node is controlled by the storage node. In other words, the execution node cannot obtain the third-party data without being monitored. Compared with a conventional data control method in which the use of the third-party data is controlled by using a service program of the third-party data, the solution in this embodiment of this application can better monitor the service program of the third-party data, thereby better ensuring that the third-party data is not misused or leaked.

Step 703: The storage node generates feedback information based on the data read request and the data read policy for the third-party data, and sends the feedback information to the execution node.

The storage node may store one or more data read policies. In addition, in some examples, the storage node may further store a data permission policy.

In this embodiment of this application, based on the data read request, the data read policy for the third-party data may be matched, and the data permission policy for the third-party data may be matched. Specific content of the feedback information may be different according to different matching results.

For example, when it is determined, according to the matching result, that data reading is allowed, the feedback information may include data that is readable; and when it is determined, according to the matching result, that data reading is not allowed, the feedback information may indicate that the data read operation in the data read request is denied.

The following describes matching processes related to the data permission policy and/or the data read policy by using examples.

### 1. Matching the data permission policy

Specifically, in some embodiments, the storage node further includes a data permission policy. The data permission policy is used to determine read/write permission for data based on a source of the data. The data permission policy indicates that the data user has read permission for the third-party data from the data provider.

Before the storage node generates the feedback information based on the first data and the data read policy for the third-party data, and sends the feedback information to the execution node, the method further comprises:

The storage node determines, based on the data permission policy and that the first data belongs to the third-party data, that the service program has read permission for the first data.

In this embodiment of this application, for related content of the data permission policy, refer to related content of the foregoing policy configuration part. Details are not described herein again.

The data permission policy may be a system-level policy of the data management system, so that basic management can be performed on the read/write permission for the data on the storage node according to the system-level policy.

In this embodiment of this application, the data permission policy may include indication information indicating that the data user has read permission for the third-party data from the data provider. In this way, after it is determined that the service program has read permission for the first data, the data may be read according to the data read policy.

It can be learned that, in this embodiment of this application, read operations for data on the storage node may be more comprehensively managed by using at least two levels of policies.

### 2. Matching the data read policy

Specifically, in some embodiments, the storage node includes one or more data read policies about the third-party data.

The storage node generating feedback information based on the data read request and the data read policy for the third-party data and sending the feedback information to the execution node includes:

The storage node matches the data read request against a policy item of at least one data read policy among the one or more data read policies; and
if a data read policy that matches the data read request exists, the storage node generates the feedback information based on an operation in the data read policy that matches the data read request, and sends the feedback information to the execution node.

In this embodiment of this application, the data read policy includes a policy item and an operation determined based on the policy item.

There may be one or more to-be-matched data read policies. When there are a plurality of to-be-matched data read policies, the plurality of data read policies may be matched in sequence. Specifically, matching may be performed according to policy items in the data read policies. The plurality of data read policies are sequentially matched until a matched data read policy exists, and feedback information is generated based on an operation in the data read policy; or, when it is determined that all the data read policies do not match, feedback information may be generated based on a default operation, or feedback information indicating that data reading is denied may be generated.

In addition, in some examples, to better manage data read operations on the execution node, the execution node may be prevented from independently obtaining the permission to interact with the storage node. Instead, the data management system manages the permission to interact with the storage node. The data management system authorizes the execution node, so that the execution node can send the data read request to the storage node only after the execution node obtains the permission to interact with the storage node.

Specifically, in some embodiments, the data management system includes a management node.

After obtaining an instruction for running the service program, the management node creates an access credential for accessing the storage node.

The management node indicates the execution node to run the service program, and transmits information about the access credential to the execution node.

The execution node sending the data read request to the storage node includes:

The execution node sends the data read request to the storage node based on the information about the access credential.

The management node may be considered as a system-level node in the data management system, and the management node may manage the permission for interaction between the execution node and the storage node. The data management system performs system-level management on the access credential for accessing the storage node through the management node, instead of allowing the execution node to independently apply for the access credential for accessing the storage node. This prevents the data user from improperly accessing the third-party data through the execution node.

It can be learned that in this embodiment of this application, the management node may manage the access credential of the execution node for the storage node. In other words, the management node may manage permission for interaction between the execution node and the storage node. In this way, the execution node cannot independently obtain access permission for the storage node, which prevents the execution node from reading and using the third-party data of the storage node without permission, and prevents leakage and improper use of the third-party data by the execution node.

A specific form of the access credential may vary. This is not limited herein.

For example, the access credential may be a storage session. Specifically, the access credential may be uniquely represented by using an identifier of the storage session. Alternatively, the access credential may be a specified key or a credential in another form.

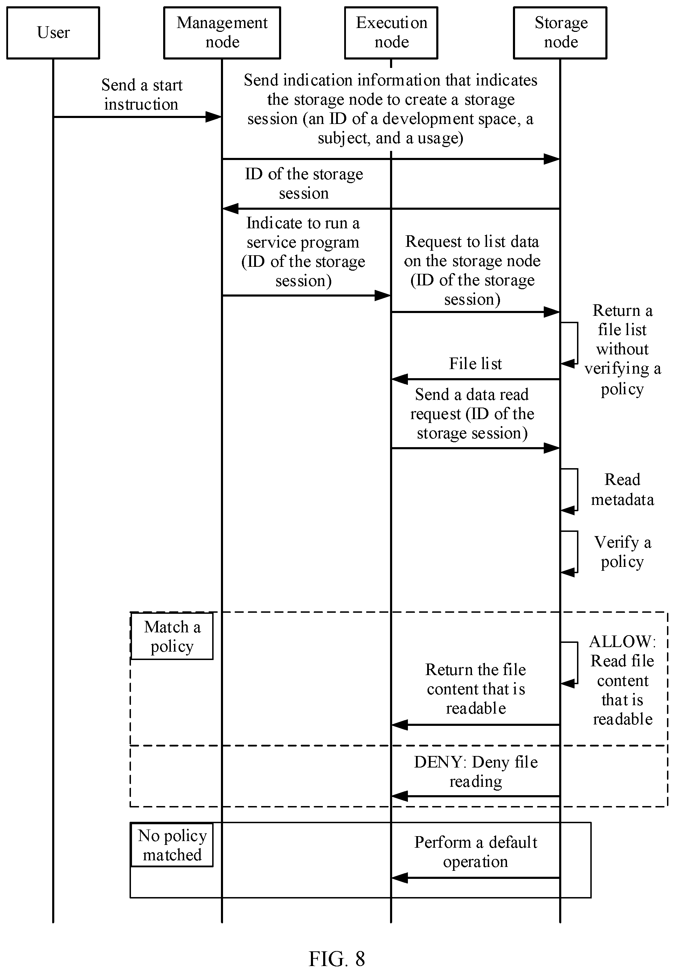

FIG. 8 is an example schematic flowchart of information exchange between the management node, the execution node, and the storage node.

In the example in FIG. 8, the following steps may be included.
(1) The data user sends, to the management node, a start instruction for starting a task, to instruct to execute a specified service through a service program.
(2) After receiving the start instruction, the management node may send, to the storage node, indication information that indicates the storage node to create a storage session.
   The indication information may include an ID of an isolated execution environment in which the management node is located (for example, an ID of a development space in which the management node is located), a subject corresponding to the storage session, and a usage corresponding to the storage session, so as to request permission for the subject to read, through the storage session, data for the usage from the storage node.
(3) After receiving the indication information, the storage node may return the ID of the storage session to the management node. In this way, the subject of the corresponding subject type may obtain, by using the ID of the storage session, the permission to read the data for the usage from the storage node.
(4) After receiving the ID of the storage session, the management node indicates the execution node to run the service program, and transmits the ID of the storage session to the service program. For example, the ID may be transmitted by using a parameter, an environment variable, or the like.
(5) When running the service program, the execution node requests, based on the ID of the storage session, the storage node to list files included in the data on the storage node.
(6) The storage node returns a file list without verifying a policy.
(7) When running the service program, the execution node sends a data read request to the storage node based on the ID of the storage session. The data read request indicates that the running service program requests to read the first data from the storage node, and the first data belongs to third-party data.
(8) The storage node reads metadata of the first data based on the data read request.
(9) The storage node verifies policies, for example, a data permission policy, and then a data read policy, based on the metadata of the first data, the subject corresponding to the storage session, the usage corresponding to the storage session, and the like.
(10) Feedback information is returned based on a matching result.

The matching result may include the following cases.
A. If the data read policy is not matched, a next data read policy is determined.
B. If the data read policy is matched:
   (a) If an operation in the data read policy is ALLOW (ALLOW), the data read policy is determined as a matched policy. File content that is readable is fed back according to the data read policy, and a subsequent policy matching operation is stopped.
   (b) If an operation in the data read policy is DENY (DENY), access to the first data is denied, and a subsequent policy matching operation is stopped.
   C. If no policy is matched, the storage node may use a default operation. The default operation may be specified by the data management system.

Specifically, whether a data read policy is matched may be determined by using a policy item of the data read policy.

For example, a data read policy includes a data policy item, a usage policy item, a count policy item, a time policy item, and a subject policy item.

An example matching manner of each policy item is as follows.

### A. Data policy item:

(a) Path filtering: A file path specified in the data read request must match the specified condition.
(b) Column selection: does not participate in matching, but is applied when the content is read.
(c) Row filtering: does not participate in matching, but is applied when the content is read.

### B. Usage policy item:

A usage specified in the data read request needs to be included in a usage list defined by the usage policy item.

### C. Count policy item:

An object controlled by the data read policy, defined by PolicyType, may be the data (DATA) or a file in the data (FILE). PolicyType in the metadata of the first data may be DATA or FILE.
(a) When PolicyType in the metadata is DATA:
   Quantity of use times: The quantity of use times of the first data is calculated according to a calculation rule specified by a user in the count policy item, and whether the quantity of use times exceeds a range is determined. Multiple reads of a piece of data within a storage session may be counted as only one usage.
(b) When PolicyType in metadata is FILE:
   1. Quantity of rows: does not participate in matching, but is applied when the content is read.
   2. Storage size: does not participate in matching, but is applied when the content is read.

### D. Time policy item:

A current time needs to be within a usage time range.

### E. Subject policy item:

The subject corresponding to the data read request can match the definition of the subject policy item. For example, userId of the subject is in userId defined in the subject policy item.

If the storage node determines, based on the matching result, that the data is allowed to be read, the storage node returns the data that is readable.

When returning the data that is readable, the storage node needs to control the content to be read based on a finally matched data read policy. There are mainly one or more of the following control manners.
Column selection: Unselected columns are removed.
Row filtering: Content is filtered.
Quantity of rows: A maximum quantity of rows that is readable is limited.
Storage size: A maximum size of data that is readable is limited.

In this way, feedback by the storage node for the data read request can be completed.

In some embodiments, to ensure validity of the access credential, the execution node deletes the access credential after stopping running the service program.

In this way, each time when the execution node starts running the service program, the execution node needs to re-obtain, through the management node, the permission for interaction between the execution node and the storage node. In this way, the execution node can neither independently obtain the access permission for the storage node nor use the obtained access permission. This effectively ensures that each access of the execution node to the storage node is controllable, and prevents the execution node from reading and using the third-party data of the storage node without permission, thereby preventing leakage and improper use of the third-party data by the execution node.

In addition, in some embodiments, the storage node may record data access behavior related to the third-party data, so that the data provider can view the data access behavior.

Specifically, in some embodiments, after step 703, the method further includes:

The storage node records data access behavior related to the data read request.

The data access behavior includes access behavior of successfully implementing data reading, or may include access behavior of failing to read data.

In this embodiment of this application, the data access behavior may include one or more of a data read request, a user related to the data read request, and a response (for example, feedback information) corresponding to the data read request.

For example, the data access behavior may include one or more of the following pieces of information:
an access time, a user (including the data user and/or the data provider), a usage, an operation (such as a read operation or a write operation), data, a file, a quantity of rows, and a storage size.

For example, an access record may be shown in Table 3.

**Table 3: Access record**

| Field name | Data type | Remarks |
|---|---|---|
| Development space ID | String | |
| Storage session ID | String | |
| Time | DateTime | |
| Read/Write | String | Read (R)/Write (W) |
| Data ID | String | |

After the storage node stores information about the data access behavior, the data provider may conveniently and flexibly view a usage status of the third-party data stored on the storage node by the data provider.

Specifically, in some embodiments, the method further includes:

The storage node obtains a query request input by the data provider, where the query request is used to request to query an access record related to the third-party data; and
the storage node outputs the access record, where the access record includes data access behavior related to the data read request.

In this embodiment of this application, the data provider may input, through a client or the like, the query request to the data management system based on an API, to request to query the access record related to the third-party data provided by the data provider. After receiving the query request, the storage node may query, based on an identifier of the data provider and/or an identifier of the third-party data, information about the data access behavior related to the third-party data from stored data access behavior information, to obtain and output the access record of the third-party data to the data provider and/or another device. In this case, the access record may include the data access behavior related to the data read request.

In this way, the data provider may conveniently query, through the storage node, a situation in which the third-party data is accessed and used by the data user. This makes use of the third-party data transparent.

In addition, the data provider can detect abnormal use of the third-party data in a timely manner and adjust the data read policy in a timely manner. The data provider may further initiate a policy negotiation process to the data user through the data management system. The data management system is used as an intermediate platform to negotiate a new data read policy with the data user, thereby meeting requirements of both the data provider and the data user.

### 4. Managing derived data

In this embodiment of this application, in a process of running the service program, after reading the third-party data from the storage node, the execution node may generate derived data in a process of applying the third-party data.

To ensure data security, in this embodiment of this application, the derived data may be tracked and managed, to prevent leakage of the derived data.

Specifically, as shown in FIG. 7, in some embodiments, the method further includes the following steps.

Step 704: The execution node sends to-be-stored data to the storage node during the process of running the service program.

Step 705: After receiving the to-be-stored data, the storage node determines and stores a derivation link of the to-be-stored data based on third-party data read by the execution node from the storage node within a specified time period.

The specified time period includes a time period during which the execution node currently runs the service program. The derivation link indicates data, on the storage node, that is used to generate the to-be-stored data.

In this embodiment of this application, the to-be-stored data may vary.

In an example, during the process of running the service program, the execution node may detect the derived data generated based on the third-party data read from the storage node, and use the derived data as the to-be-stored data.

In another example, during the process of running the service program, the execution node may generate temporary data and persistent data that needs to be stored persistently. The temporary data may be stored on the execution node, for example, may be stored by using a cache, a memory, or the like of the execution node. The persistent data needs to be stored by using the storage node. Therefore, the execution node may use the persistent data as the to-be-stored data and send the to-be-stored data to the storage node. In this example, whether the to-be-stored data is actually generated based on the third-party data is not checked.

After receiving the to-be-stored data, the storage node may consider that the to-be-stored data is probably generated based on the third-party data read by the execution node from the storage node within the specified time period. Therefore, the derivation link of the to-be-stored data is determined and stored based on the third-party data read by the execution node from the storage node within the specified time period.

The specified time period may include a time period from a time point at which the execution node currently starts running the service program to a time point at which the storage node receives the to-be-stored data.

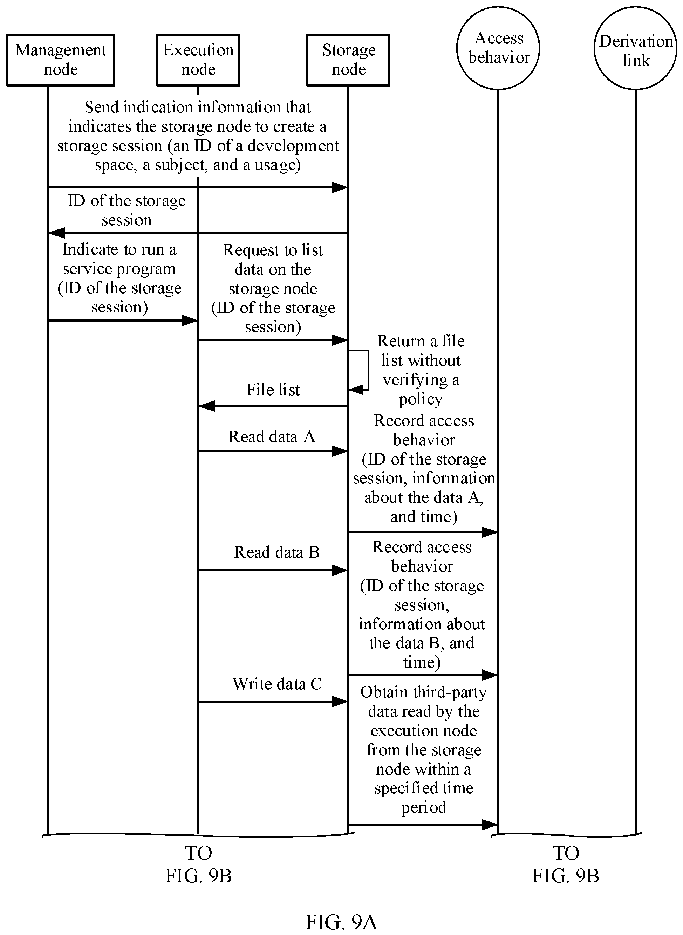

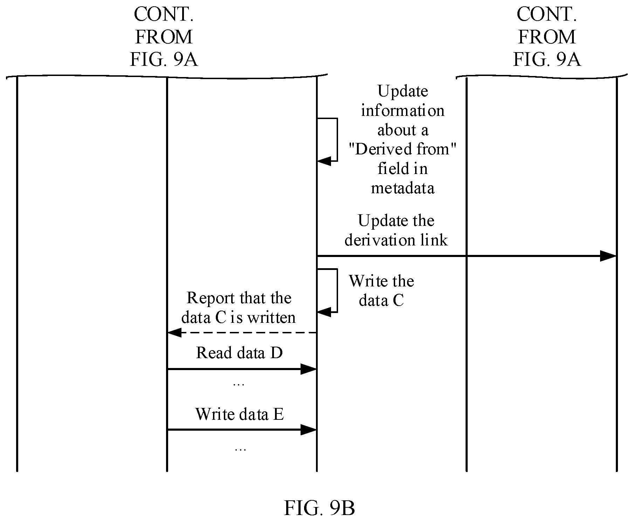

For example, in the schematic flowchart shown in FIG. 9A and FIG. 9B, after the management node indicates the execution node to run the service program, and transmits, to the execution node, the ID of the storage session as the access credential, the following steps may be included:

The execution node reads data A from the storage node, where the data A is third-party data;
the storage node records access behavior related to the data A, for example, records an ID of a storage session, information about the data A, and time;
the execution node reads data B from the storage node, where the data B is third-party data;
the storage node records access behavior related to the data B, for example, records an ID of a storage session, information about the data B, and time;
the execution node writes data C into the storage node, where the data C may be considered as to-be-stored data;
the storage node may obtain, based on the recorded access behavior, the third-party data read by the execution node from the storage node within a specified time period from creation of the current storage session ID to the current write operation;
based on the information about the third-party data, information about a "Derived from" field in metadata of the data C on the storage node is updated, to indicate that the data C is derived from the data A and the data B;
the storage node determines and stores a derivation link of the data C;
the storage node writes content of the data C, and returns information to the execution node to indicate that the data C has been written;
the execution node reads data D from the storage node, where the data D is third-party data, and a related read operation is not described again; and
the execution node writes data E into the storage node, and a related read operation is not described again.

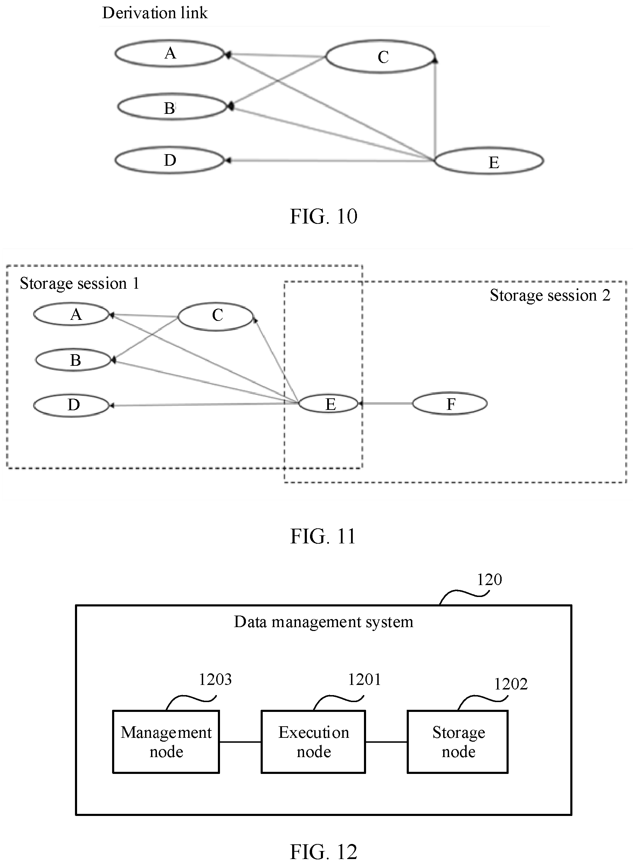

After the foregoing steps are performed, the storage node may generate and store the derivation link shown in FIG. 10. The data C is derived from the data A and the data B, and the data E is derived from the data A, the data B, the data C, and the data D.

For example, the derivation link may be recorded by using fields shown in Table 4.

**Table 4: Fields of the derivation link**

| Field name | Data type | Remarks |
|---|---|---|
| Space ID | String | |
| Source data ID | String | |
| Target data ID | String | |

In the derivation link of the data C, the data C may be considered as target data, and the data A and the data B are source data of the data C.

In addition, in a development space, after the service program on the execution node is executed for a plurality of times, related derivation links may be automatically combined and updated. As shown in FIG. 11, a derivation link related to a storage session 1 and a derivation link related to a storage session 2 may be combined.

When viewing a derivation link of the data A, the data provider or the data user may find subsequent derivation links and related derived data of the data A based on the record of the derivation link.

In addition, the data provider may further request to delete the third-party data provided by the data provider, and may further request to delete the derived data of the third-party data.

Specifically, the data provider may initiate a delete request to the storage node. In addition, the storage node may provide a period of time as a buffer. For example, the data user may receive a notification about the delete request, and then may adjust the service program in a timely manner based on all derivation links corresponding to the to-be-deleted third-party data. After the buffer time expires, the data management system may delete the third-party data and the related derived data based on the foregoing derivation links, and notify the data user. If the data user cannot complete adjustment within the buffer time, the data user can request an extension, and after the data provider agrees, a new time is used.

### 5. Stopping running a service program

Specifically, in some embodiments, the method further includes:
The execution node deletes running data related to the service program from the execution node after stopping running the service program.

After completing current execution of the service program, the execution node may delete running data related to the current execution and stored on the execution node, such as temporary data. However, the execution node may be reserved to execute another service of the data user, or run the service program again subsequently. Alternatively, after the execution node completes the current execution of the service program, the execution node may be destroyed.

In this way, it can be effectively ensured that an access history of the third-party data during the process of running the service program is deleted. This prevents the execution node from improperly retaining the third-party data used during the process of running the service program, thereby ensuring that the third-party data is not leaked or misused.

The foregoing describes the data management method provided in embodiments of this application from a plurality of aspects. The following describes a data management system provided in embodiments of this application with reference to the accompanying drawings.

As shown in FIG. 12, an embodiment of this application provides a data management system 120. The data management system 120 is disposed in at least one data center. The data management system 120 is located in an isolated execution environment. The isolated execution environment is connected to a data provider and a data user respectively through an application programming interface API. The data management system 120 includes an execution node 1201 and a storage node 1202. The storage node 1202 stores third-party data of the data provider.

The execution node 1201 is configured to:
run a service program, where the service program is used to execute a service of the data user; and
send a data read request to the storage node, where the data read request indicates that a running service program requests to read first data from the storage node, and the first data belongs to the third-party data.

The storage node 1202 is configured to: generate feedback information based on the data read request and a data read policy for the third-party data, and send the feedback information to the execution node.

Optionally, the system 120 further includes a management node 1203.

The management node 1203 is configured to: monitor behavior of the data user in accessing the data management system through the API, and monitor behavior of the data management system in outputting data through the API.

Optionally, the data read policy is determined by the data provider. The data read policy includes a policy item and an operation determined based on the policy item. The policy item includes one or more of the following items:
a data policy item, a usage policy item, a count policy item, a time policy item, and a subject policy item.

The data policy item is used to describe a range of data in the third-party data that is readable.

The usage policy item is used to describe a task within the service program that is allowed to use the third-party data.

The count policy item is used to describe a usage amount threshold of the third-party data.

The time policy item is used to describe a usage time range of the third-party data.

The subject policy item is used to describe a subject type to which the data read policy is applicable.

Optionally, the storage node 1202 includes one or more data read policies about the third-party data.

The storage node 1202 is configured to:
match the data read request against a policy item of at least one data read policy among the one or more data read policies; and
if a data read policy that matches the data read request exists, generate the feedback information based on an operation in the data read policy that matches the data read request, and send the feedback information to the execution node.

Optionally, the storage node 1202 further includes a data permission policy. The data permission policy is used to determine read/write permission for data based on a source of the data. The data permission policy indicates that the data user has read permission for the third-party data from the data provider.

The storage node 1202 is further configured to:
determine, based on the data permission policy and that the first data belongs to the third-party data, that the service program has read permission for the first data.

Optionally, the management node 1203 is configured to:
after obtaining an instruction for running the service program, create an access credential for accessing the storage node; and
indicate the execution node to run the service program, and transmit information about the access credential to the execution node.

The execution node 1201 is configured to:
send the data read request to the storage node based on the information about the access credential.

Optionally, the execution node 1201 is further configured to delete the access credential after the execution node stops running the service program.

Optionally, the storage node 1202 is further configured to record data access behavior related to the data read request.

Optionally, the storage node 1202 is further configured to:
obtain a query request input by the data provider, where the query request is used to request to query an access record related to the third-party data; and
output the access record, where the access record includes the data access behavior related to the data read request.

Optionally, the execution node 1201 is further configured to send to-be-stored data to the storage node in a process of running the service program.

The storage node 1202 is further configured to: after receiving the to-be-stored data, determine and store a derivation link of the to-be-stored data based on the third-party data read by the execution node from the storage node within a specified time period. The specified time period includes a time period during which the execution node currently runs the service program. The derivation link indicates data, on the storage node, that is used to generate the to-be-stored data.

Optionally, the execution node 1201 is further configured to delete running data related to the service program from the execution node after the execution node stops running the service program.

In this embodiment of this application, the execution node, the storage node, and the management node may be implemented by using software, or may be implemented by using hardware. For example, the following uses the execution node as an example to describe an implementation of the execution node. Similarly, for implementations of the storage node and the management node, refer to the implementation of the execution node.

A module is used as an example of a software functional unit, and the execution node may include code run on a compute instance. The compute instance may include at least one of a physical host (compute device), a virtual machine, and a container. Further, there may be one or more compute instances. For example, the execution node may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the execution node may include at least one compute device, for example, a server. Alternatively, the execution node may be a device implemented by using a central processing unit (central processing unit, CPU), a device implemented by using an application-specific integrated circuit (application-specific integrated circuit, ASIC), a device implemented by using a programmable logic device (programmable logic device, PLD), or the like. The PLD may be implemented by a complex program logic device (complex programmable logic device, CPLD), a field-programmable gate array (field-programmable gate array, FPGA), a generic array logic (generic array logic, GAL), a data processing unit (data processing unit, DPU), a neural network processing unit (Neural Network Processing Unit, NPU), a system on chip (system on chip, SoC), an offload card, an accelerator card, or any combination thereof.

A plurality of compute devices included in the execution node may be distributed in a same region, or may be distributed in different regions. The plurality of compute devices included in the execution node may be distributed in a same AZ, or may be distributed in different AZs. Similarly, the plurality of compute devices included in the execution node may be distributed in a same VPC, or may be distributed in a plurality of VPCs. The plurality of compute devices may be any combination of compute devices such as a server, an ASIC, a PLD, a CPLD, an FPGA, a GAL, a DPU, an NPU, an SoC, an offload card, and an accelerator card.

It should be noted that, in another embodiment, the execution node may be configured to perform any step in the data management method, the storage node may be configured to perform any step in the data management method, and the management node may be configured to perform any step in the data management method. Steps implemented by the execution node, the storage node, and the management node may be specified as required. The execution node, the storage node, and the management node separately implement different steps in the data management method to implement all functions of the data management system.

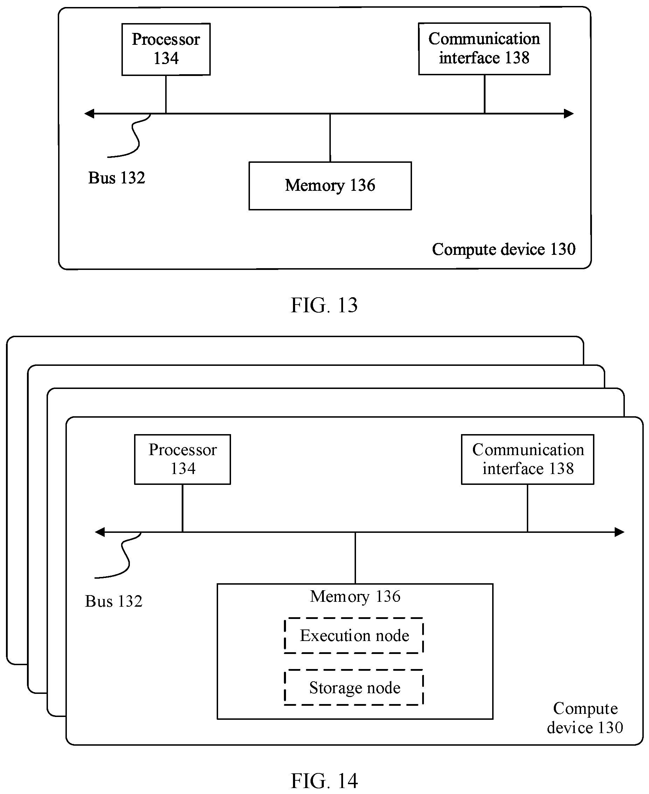

An embodiment of this application further provides a compute device 130. As shown in FIG. 13, the compute device 130 includes a bus 132, a processor 134, a memory 136, and a communication interface 138. The processor 134, the memory 136, and the communication interface 138 communicate with each other via the bus 132. The compute device 130 may be a server or a terminal device. It should be understood that quantities of processors and memories in the compute device 130 are not limited in this application.

The bus 132 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 13. However, it does not mean that there is only one bus or only one type of bus. The bus 134 may include a path for information transmission between components (for example, the memory 136, the processor 134, and the communication interface 138) of the compute device 130.

The processor 134 may include any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 136 may include a volatile memory (volatile memory), for example, a random access memory (random access memory, RAM). The memory 136 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 136 stores executable program code. The processor 134 executes the executable program code to separately implement functions of the execution node and the storage node, so as to implement the data management method applied to the compute device cluster in the foregoing embodiments. In other words, the memory 136 stores instructions for performing the data management method applied to the compute device cluster in the foregoing embodiments.

The communication interface 138 uses a transceiver module, for example, but not limited to, a network interface card or a transceiver, to implement communication between the compute device 130 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 14, the compute device cluster includes at least one compute device 130. A memory 136 in one or more compute devices 130 in the compute device cluster may store same instructions for performing the data processing method.

Alternatively, in some possible implementations, the memory 136 in the one or more compute devices 130 in the compute device cluster may separately store some instructions for performing the data management method. In other words, a combination of the one or more compute devices 130 may jointly execute the instructions for performing the data management method.

It should be noted that the memories 136 in different compute devices 130 in the compute device cluster may store different instructions respectively used for performing some functions of the data management method. In other words, the instructions stored in the memories 136 in the different compute devices 130 may implement functions of one or more modules in the execution node and the storage node.

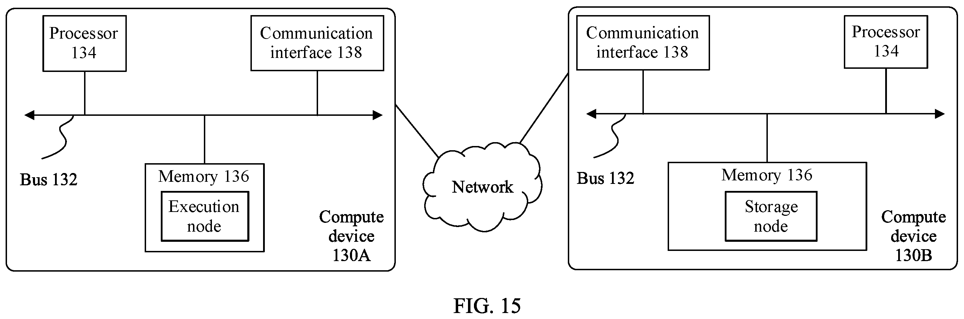

In some possible implementations, one or more compute devices in the compute device cluster may be connected via a network. The network may be a wide area network, a local area network, or the like. FIG. 15 shows a possible implementation. As shown in FIG. 15, two compute devices 130A and 130B are connected via a network. Specifically, the compute devices are connected to the network through communication interfaces of the compute devices. In this possible implementation, the memory 136 in the compute device 130A may store instructions for performing functions of the execution node; and the memory 136 in the compute device 130B may store instructions for performing functions of the storage node. Alternatively, the memory 136 in the compute device 130A may store instructions for executing some functions of the storage node; and the memory 136 in the compute device 130B may store instructions for performing another part of functions of the storage node.

It should be understood that functions of the compute device 130A shown in FIG. 15 may alternatively be completed by a plurality of compute devices 130. Similarly, a function of the compute device 130B may alternatively be completed by a plurality of compute devices 130.

An embodiment of this application further provides another compute device cluster. For a connection relationship between compute devices in the compute device cluster, refer to the connection manner in the compute device cluster in FIG. 14 and FIG. 15 similarly. A difference lies in that a memory 136 in one or more compute devices 130 in the compute device cluster may store same instructions for performing the data processing method.

Alternatively, in some possible implementations, the memory 136 in the one or more compute devices 130 in the compute device cluster may separately store some instructions for performing the data management method. In other words, a combination of the one or more compute devices 130 may jointly execute the instructions for performing the data management method.

It should be noted that the memories 136 in different compute devices 130 in the compute device cluster may store different instructions used for performing some functions of the data management method. In other words, the instructions stored in the memories 136 in the different compute devices 130 may implement functions of one or more modules in the execution node and the storage node.

An embodiment of this application further provides a computer program product including instructions. The computer program product may be software or a program product that includes instructions and that can run on a compute device or can be stored on any usable medium. When the computer program product runs on at least one compute device, the at least one compute device is caused to perform the data management method.

An embodiment of this application further provides a computer-readable storage medium. The computer-readable storage medium may be any usable medium that can be stored by a compute device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the compute device to perform the data management method.

An embodiment of this application further provides a chip system. The chip system includes a processor. The processor is configured to implement the steps performed by the compute device cluster. In a possible design, the chip system may further include a memory. The memory is configured to store necessary program instructions and data. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A data management method, applied to a data management system, wherein the data management system is disposed in at least one data center, the data management system is located in an isolated execution environment, the isolated execution environment is connected to a data provider and a data user respectively through an application programming interface API, the data management system comprises an execution node and a storage node, and the storage node stores third-party data of the data provider; and the method comprises:
running, by the execution node, a service program, wherein the service program is used to execute a service of the data user;
sending, by the execution node, a data read request to the storage node, wherein the data read request indicates that the running service program requests to read first data from the storage node, and the first data belongs to the third-party data; and
generating, by the storage node, feedback information based on the data read request and a data read policy for the third-party data, and sending the feedback information to the execution node.

2. The method according to claim 1, wherein the method further comprises:
monitoring behavior of the data user in accessing the data management system through the API, and monitoring behavior of the data management system in outputting data through the API.

3. The method according to claim 1 or 2, wherein the data read policy is determined by the data provider, the data read policy comprises a policy item and an operation determined based on the policy item, and the policy item comprises one or more of the following items:
a data policy item, a usage policy item, a count policy item, a time policy item, and a subject policy item;
the data policy item is used to describe a range of data within the third-party data that is readable;
the usage policy item is used to describe a task within the service program that is allowed to use the third-party data;
the count policy item is used to describe a usage amount threshold of the third-party data;
the time policy item is used to describe a usage time range of the third-party data; and
the subject policy item is used to describe a subject type to which the data read policy is applicable.

4. The method according to claim 3, wherein the storage node comprises one or more data read policies for the third-party data; and
generating, by the storage node, the feedback information based on the data read request and the data read policy for the third-party data, and sending the feedback information to the execution node comprise:
matching, by the storage node, the data read request against the policy item of at least one data read policy among the one or more data read policies; and
if a data read policy that matches the data read request exists, generating, by the storage node, the feedback information based on an operation in the data read policy that matches the data read request, and sending the feedback information to the execution node.

5. The method according to any one of claims 1 to 4, wherein the storage node further comprises a data permission policy, the data permission policy is used to determine read/write permission for data based on a source of the data, and the data permission policy indicates that the data user has read permission for the third-party data from the data provider; and
before generating, by the storage node, the feedback information based on the first data and the data read policy for the third-party data, and sending the feedback information to the execution node, the method further comprises:
determining, by the storage node based on the data permission policy and that the first data belongs to the third-party data, that the service program has read permission for the first data.

6. The method according to any one of claims 1 to 5, wherein the data management system comprises a management node, and the method further comprises:
after obtaining an instruction for running the service program, creating, by the management node, an access credential for accessing the storage node; and
indicating, by the management node, the execution node to run the service program, and transmitting information about the access credential to the execution node; and
sending, by the execution node, the data read request to the storage node comprises:
sending, by the execution node, the data read request to the storage node based on the information about the access credential.

7. The method according to claim 6, wherein the method further comprises:
deleting the access credential after the execution node stops running the service program.

8. The method according to any one of claims 1 to 7, wherein after generating, by the storage node, the feedback information based on the first data and the data read policy for the third-party data, and sending the feedback information to the execution node, the method further comprises:
recording, by the storage node, data access behavior related to the data read request.

9. The method according to claim 8, wherein the method further comprises:
obtaining, by the storage node, a query request input by the data provider, wherein the query request is used to request to query an access record related to the third-party data; and
outputting, by the storage node, the access record, wherein the access record comprises the data access behavior related to the data read request.

10. The method according to any one of claims 1 to 9, wherein the method further comprises:
sending, by the execution node, to-be-stored data to the storage node in a process of running the service program; and
after receiving the to-be-stored data, determining and storing, by the storage node, a derivation link of the to-be-stored data based on the third-party data read by the execution node from the storage node within a specified time period, wherein the specified time period comprises a time period during which the execution node currently runs the service program, and the derivation link indicates data, on the storage node, that is used to generate the to-be-stored data.

11. The method according to any one of claims 1 to 10, wherein the method further comprises:
deleting running data related to the service program from the execution node after the execution node stops running the service program.

12. A data management system, wherein the data management system is disposed in at least one data center, the data management system is located in an isolated execution environment, the isolated execution environment is connected to a data provider and a data user respectively through an application programming interface API, the data management system comprises an execution node and a storage node, and the storage node stores third-party data of the data provider;
the execution node is configured to:
run a service program, wherein the service program is used to execute a service of the data user; and
send a data read request to the storage node, wherein the data read request indicates that the running service program requests to read first data from the storage node, and the first data belongs to the third-party data; and
the storage node is configured to: generate feedback information based on the data read request and a data read policy for the third-party data, and send the feedback information to the execution node.

13. The system according to claim 12, wherein the system further comprises a management node; and
the management node is configured to monitor behavior of the data user in accessing the data management system through the API, and monitor behavior of the data management system in outputting data through the API.

14. The system according to claim 12 or 13, wherein the data read policy is determined by the data provider, the data read policy comprises a policy item and an operation determined based on the policy item, and the policy item comprises one or more of the following items:
a data policy item, a usage policy item, a count policy item, a time policy item, and a subject policy item;
the data policy item is used to describe a range of data within the third-party data that is readable;
the usage policy item is used to describe a task within the service program that is allowed to use the third-party data;
the count policy item is used to describe a usage amount threshold of the third-party data;
the time policy item is used to describe a usage time range of the third-party data; and
the subject policy item is used to describe a subject type to which the data read policy is applicable.

15. The system according to claim 14, wherein the storage node comprises one or more data read policies for the third-party data; and
the storage node is configured to:
match the data read request against the policy item of at least one data read policy among the one or more data read policies; and
if a data read policy that matches the data read request exists, generate the feedback information based on an operation in the data read policy that matches the data read request, and send the feedback information to the execution node.

16. The system according to any one of claims 12 to 15, wherein the storage node further comprises a data permission policy, the data permission policy is used to determine read/write permission for data based on a source of the data, and the data permission policy indicates that the data user has read permission for the third-party data from the data provider; and
the storage node is further configured to:
determine, based on the data permission policy and that the first data belongs to the third-party data, that the service program has read permission for the first data.

17. The system according to any one of claims 12 to 16, wherein the system further comprises a management node;
the management node is configured to:
after obtaining an instruction for running the service program, create an access credential for accessing the storage node; and
indicate the execution node to run the service program, and transmit information about the access credential to the execution node; and
the execution node is configured to:
send the data read request to the storage node based on the information about the access credential.

18. The system according to claim 17, wherein
the execution node is further configured to delete the access credential after the execution node stops running the service program.

19. The system according to any one of claims 12 to 18, wherein
the storage node is further configured to record data access behavior related to the data read request.

20. The system according to claim 19, wherein
the storage node is further configured to:
obtain a query request input by the data provider, wherein the query request is used to request to query an access record related to the third-party data; and
output the access record, wherein the access record comprises the data access behavior related to the data read request.

21. The system according to any one of claims 12 to 20, wherein
the execution node is further configured to send to-be-stored data to the storage node in a process of running the service program; and
the storage node is further configured to: after receiving the to-be-stored data, determine and store a derivation link of the to-be-stored data based on the third-party data read by the execution node from the storage node within a specified time period, wherein the specified time period comprises a time period during which the execution node currently runs the service program, and the derivation link indicates data, on the storage node, that is used to generate the to-be-stored data.

22. The system according to any one of claims 12 to 21, wherein
the execution node is further configured to delete running data related to the service program from the execution node after the execution node stops running the service program.

23. A compute device cluster, comprising at least one compute device, wherein the at least one compute device comprises a processor and a memory; and
the processor is configured to execute instructions stored in the memory, to enable the compute device cluster to perform the method according to any one of claims 1 to 11.

24. A computer-readable storage medium, wherein the computer-readable storage medium stores a computer program, and when the computer program is run on a processor, the processor is enabled to perform the method according to any one of claims 1 to 11.

25. A computer program product comprising instructions, wherein when the instructions are executed by a processor, the method according to any one of claims 1 to 11 is implemented.
